# EUROPÄISCHE PATENTSCHRIFT

(11) **EP 0 761 092 B1**
(45) Veröffentlichungstag und Bekanntmachung des Hinweises auf die Patenterteilung: **14.03.2001**
(21) Anmeldenummer: 96109988.4
(22) Anmeldetag: 20.06.1996
(51) Int. Cl.: A01J 25/11

(54) **Vorrichtung zum Gewinnen von Käsemasse**
Device for obtaining curd
Dispositif d'obtention de caillé

(30) Priorität: 28.08.1995 DE 19531601
(43) Veröffentlichungstag der Anmeldung: 12.03.1997
(73) Patentinhaber: ALPMA Alpenland Maschinenbau GmbH, 83543 Rott am Inn (DE)
(72) Erfinder: Hain, Gottfried, Dipl.-Ing., 83539 Pfaffing (DE)
(74) Vertreter: Finsterwald, Martin, Dr.

(56) Entgegenhaltungen:
- DE-A- 3 038 661
- FR-A- 1 597 616
- FR-A- 2 260 294
- US-A- 3 394 011

## Beschreibung

Die Erfindung betrifft eine Vorrichtung zum Gewinnen von Käsemasse aus Milch mit einem langgestreckten Trog, der an seinem einen Ende mit einem Einfüllbereich und an seinem anderen Ende mit einem Austragsbereich versehen ist und eine zumindest im wesentlichen kontinuierlich zwischen Einfüll- und Austragsbereich transportierbare Innenwand aufweist, wobei das Trogvolumen durch eine Anzahl von dem Trogquerschnitt angepaßten, mit der Innenwand koppel- und gemeinsam mit dieser bewegbaren Trennwänden in in Längsrichtung aufeinanderfolgende Zellen unterteilbar ist.

Mittels derartiger Vorrichtungen wird die Milch bei der Käseherstellung einem Koagulationsvorgang ausgesetzt, für dessen einwandfreien Ablauf gewährleistet sein muß, daß sich die Milch in Ruhe befindet und das Auftreten von Strömungen zumindest weitestgehend vermieden wird.

Um trotz dieses Erfordernisses einen kontinuierlichen Koagulationsvorgang zu ermöglichen, ist der langgestreckte Trog mit einer in Transportrichtung zwischen Einfüll- und Austragsbereich beweglichen Innenwand ausgestattet, so daß bei langsamer Bewegung dieser Innenwand die koagulierende Milch in Richtung des Austragsbereichs transportierbar ist, ohne daß eine Relativbewegung zwischen Innenwand und Milch stattfindet.

Um dabei zu verhindern, daß im Einfüllbereich zulaufende Milch sich mit der bereits koagulierenden Milch vermischt und sich dadurch unerwünschte Strömungen und Wirbel ausbilden, hat man im Trog in Transportrichtung voneinander beabstandete Trennwände vorgesehen, die das Innenvolumen des Trogs in aufeinanderfolgende Zellen unterteilen, welche strömungstechnisch voneinander entkoppelt sind. Auf diese Weise kann beispielsweise eine Zelle mit Milch befüllt werden, während in der dieser Zelle vorauslaufenden Zelle bereits ein Koagulationsvorgang abläuft, ohne daß dieser Koagulationsvorgang auf nachteilige Weise beeinflußt wird.

Um eine Abdichtung benachbarter Zellen gegeneinander bzw. eine strömungsdichte Verbindung zwischen Trennwänden und Troginnenwand zu erreichen, wurde der der Innenwand zugewandte Umfangsbereich der Trennwände beispielsweise mit einem flexiblen Dichtungsprofil versehen.

Ein derartiges Dichtungsprofil ist in der deutschen Patentschrift DE 24 51 617 C2 genannt. Diese Schrift beschreibt eine Vorrichtung zum kontinuierlichen Gewinnen von Käsemasse, bei der Trennwände gemeinsam mit einer Troginnenwand mitbewegbar sind. Diese Trennwände sind von Laufwagen getragen, die in einer Schienenführung geführt sind. Die Trennwände weisen das flexible Dichtungsprofil in Form eines weichen, nachgiebigen Kunststoffschlauchs auf, der in eine Umfangsnut der jeweiligen Trennwand eingelegt ist.

Mit diesem Dichtungsprofil ließ sich zwar die erforderliche Abdichtung benachbarter Zellen weitgehend erreichen, es war jedoch nicht möglich, auf diese Weise eine stabile Verbindung zwischen Trennwänden und Troginnenwand zu schaffen, so daß durch unterschiedliche Füllstände benachbarter Zellen bewirkte Querkräfte auf die Trennwand auf nachteilige Weise zu einer Bewegung bzw. einem Kippen derselben führten. Dies konnte nur dadurch vermieden werden, daß versucht wurde, sicherzustellen, daß benachbarte Zellen jeweils weitestgehend gleiche Füllstände aufwiesen.

Da beispielsweise bei einem eine veränderte Transportgeschwindigkeit der Troginnenwand erfordernden Sortenwechsel eine Sorte vollständig aus dem Trog ausgetragen werden muß, bevor Milch zur Erzeugung der neuen Sorte eingefüllt werden kann, führt das letztgenannte Erfordernis der weitestgehend gleichen Füllstände dazu, daß alle auf die letzte Zelle der ersten Sorte folgenden Zellen mit Wasser befüllt werden müssen, bevor die erste Zelle für die Herstellung der zweiten Sorte mit Milch befüllt werden kann. Dies führt unter anderem zu einem unerwünscht hohen Wasserverbrauch.

Weiterhin sind die bisher verwendeten Dichtungsprofile unter hygienischen Gesichtspunkten problematisch, da sie sich nur schwer reinigen lassen und dadurch die Gefahr einer Kontamination bedingen.

Eine Aufgabe der Erfindung besteht darin, eine Vorrichtung der eingangs genannten Art derart weiterzubilden, daß die Trennwände zur Aufnahme von Querkräften geeignet, die Dichtwirkung zwischen Trennwänden und Troginnenwand verbessert und die Kontaminationsgefahr verringert wird.

Erfindungsgemäß wird diese Aufgabe dadurch gelöst, daß zur Erzeugung einer mechanisch stabilen und benachbarte Zellen gegeneinander abdichtenden Verbindung zwischen einander zugewandten Bereichen von Troginnenwand und Trennwand jeder Trennwand eine Spannvorrichtung zugeordnet ist, die sowohl an der zugeordneten Trennwand als auch an der Troginnenwand angreift und mittels der die aus nachgiebigem Material bestehende Troginnenwand unter geringfügiger Verformung um den ihr zugewandten Teilbereich des Trennwandumfangs spannbar ist.

Durch die erfindungsgemäß vorgesehene Spannvorrichtung wird die aus starrem Material bestehende Trennwand im gesamten Bereich ihres der Troginnenwand zugewandten Umfangs in die geringfügig nachgiebige Troginnenwand eingedrückt, wodurch eine absolut dichte und sehr stabile Verbindung zwischen Trennwand und Troginnenwand entsteht.

Diese Verbindung wird allein durch den genannten Eindrückbzw. Spannvorgang bewirkt, so daß es erfindungsgemäß nicht mehr nötig ist, die Trennwände entlang ihres der Troginnenwand zugewandten Umfangs mit einem separaten Dichtungsprofil zu versehen. Die Troginnenwand kann vielmehr ohne die Vorsehung jeglicher zusätzlicher Maßnahmen um die aus starrem Material bestehende Trennwand gespannt werden. Durch die druckbeaufschlagte Berührung von nachgiebiger Troginnenwand und starrer Trennwand ergibt sich eine kraftschlüssige Verbindung, die zusätzlich auch eine außerordentlich zuverlässige strömungstechnische Abdichtung benachbarter Zellen bewirkt.

Durch die Erfindung läßt sich folglich mit einfachen mechanischen Mitteln eine stabile und strömungsdichte Befestigung der Trennwand an der Troginnenwand erzielen, wodurch es möglich wird, benachbarte Zellen mit stark unterschiedlichen Füllständen zu versehen. Da die erfindungsgemäße Vorrichtung zudem ohne die bisher üblichen Dichtungsprofile auskommt, gestaltet sich auch die Reinigung der erfindungsgemäßen Trennwände besonders einfach, wodurch sich die bestehende Kontaminationsgefahr ganz erheblich verringern läßt.

Ein wesentlicher Vorteil der Erfindung besteht weiterhin darin, daß die zwischen den Trennwänden ausgebildeten Zellen nunmehr im Einfüllbereich direkt mit Milch befüllt werden können, da die in Transportrichtung hinterste Trennwand - genauso wie alle anderen Trennwände - so stabil mit der Troginnenwand verbunden ist, daß im Extremfall evtl. selbst bei einer vollständig befüllten ersten Zelle im Einfüllbereich und einer nachfolgenden leeren oder überhaupt noch nicht gebildeten Zelle sichergestellt werden kann, daß die genannte Trennwand nicht kippt.

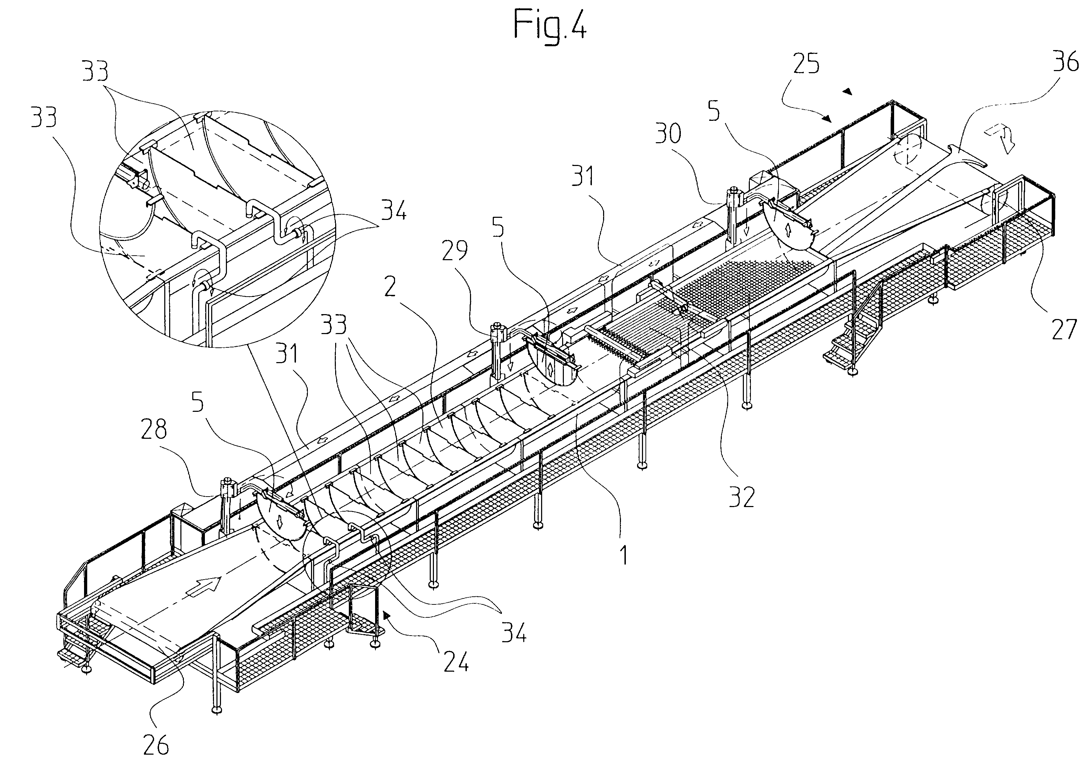

Falls die durch die genannten unterschiedlichen Füllstände benachbarter Zellen bewirkten Querkräfte auf einzelne Trennwände zu groß sein sollten, kann erfindungsgemäß beispielsweise auf eine vollständig befüllte Zelle eine Zelle mit geringerem Füllstand folgen, woraufhin die auf diese Zelle folgende Zelle dann bereits vollständig leer sein kann, ohne daß ein Kippen der entsprechenden Trennwände befürchtet werden müßte. In diesem Fall können die Zellen beispielsweise durch zwei in Transportrichtung der Trennwände voneinander beabstandete Einfüllrohre stufenweise in zwei Schritten befüllt werden (siehe auch Detaildarstellung der Fig. 4).

Da durch das erfindungsgemäß mögliche direkte Befüllen der Zellen mit Milch im Gegensatz zum Stand der Technik kein Milcheinlaufsumpf mehr benötigt wird, werden auch bakteriologische Probleme durch zeitlich undefinierte Verweildauern einzelner Volumenelemente der eingefüllten Milch im Einfüllbereich vermieden.

Durch das direkte Befüllen von Zellen im Einfüllbereich lassen sich weiterhin die auftretenden Strömungen beim Einfüllvorgang im Vergleich zum Stand der Technik wesentlich verringern. Zudem ist es ohne Schwierigkeiten möglich, bei einem Sortenwechsel das Ausgangsprodukt - beispielsweise den Fettgehalt der Milch - zu verändern, ohne daß eine Vermischung dieser verschiedenen Ausgangsprodukte stattfinden kann.

Durch die Erfindung wird weiterhin folgender bisher bestehender Nachteil beseitigt:

Falls es bei einem Sortenwechsel beispielsweise nötig ist die Transportgeschwindigkeit der Troginnenwand zu verändern, muß der Trog erst vollständig geleert werden, bevor mit der Produktion der neuen Sorte begonnen werden kann, da anderenfalls die letzten Zellen der alten Sorte den Trog bereits mit der neuen Transportgeschwindigkeit durchlaufen müßten, was eine nachteilige Veränderung der Qualität der alten Sorte bewirken würde. Um ein vollständiges Entleeren des Troges zu erreichen, wurden bisher alle Zellen mit Wasser befüllt, um zu verhindern, daß die Trennwände kippen.

Da das Kippen der Trennwände erfindungsgemäß kein Problem mehr darstellt, kann auf das Befüllen sämtlicher Zellen mit Wasser verzichtet werden, wodurch sich der Wasserverbrauch auf vorteilhafte Weise ganz erheblich reduzieren läßt. Wenn in diesem Fall die durch unterschiedliche Füllstände benachbarter Zellen bewirkten Querkräfte auf einzelne Trennwände zu groß sein sollten, kann ebenfalls beispielsweise auf eine vollständig befüllte Zelle eine Zelle mit geringerem Füllstand folgen, woraufhin die auf diese Zelle folgende Zelle dann bereits vollständig leer sein kann, ohne daß ein Kippen der entsprechenden Trennwände befürchtet werden müßte.

Eine besonders gute Abdichtung und stabile Verbindung zwischen Trennwand und Troginnenwand ergibt sich dann, wenn die Trennwand an ihren der Troginnenwand zugewandten Schmalseiten mit einem Radius oder einer dachförmigen Kante versehen ist, da sich derartig bearbeitete Schmalseiten besonders gut in die elastische Troginnenwand eindrücken lassen und auf diese Weise eine zuverlässige Dichtwirkung erzielen.

Die Spannvorrichtung wird bevorzugt an der Trennwand angebracht und kann dabei beispielsweise zwei jeweils als Federstäbe ausgebildete Federelemente aufweisen, die vor der Kopplung mit der Troginnenwand vorspannbar und bei Kopplung mit der Troginnenwand unter teilweiser Entspannung derselben zur Erzeugung der erforderlichen Spannkraft geeignet sind. Die Spannvorrichtung läßt sich jedoch auch auf beliebig andere Weise ausbilden, es muß lediglich gewährleistet sein, daß die Troginnenwand mit ausreichender Zugkraft um die jeweilige Trennwand spannbar ist.

Um die auf die Troginnenwand wirkenden Spannkräfte aufzunehmen, kann diese insbesondere quer zur Transportrichtung der Milch- bzw. Käsemasse im Trog verstärkt sein.

Um zu ermöglichen, daß sich die Trennwände in die Troginnenwand eindrücken können, wird die Troginnenwand bevorzugt aus zumindest geringfügig elastisch verformbarem Kunststoff, insbesondere aus PVC gefertigt. Dabei kann die Troginnenwand mit einem Längs- und/oder Quergewebe versehen werden, um sicherzustellen, daß sie den auftretenden Längs- und/oder Querkräften standhält.

Unter hygienischen Gesichtspunkten ist es sinnvoll, die Trennwände zumindest im wesentlichen aus Metall, insbesondere aus Edelstahl zu fertigen. Derartige Trennwände lassen sich besonders leicht reinigen und wirken sich auch unter ästhetischen Gesichtspunkten positiv auf die erfindungsgemäße Anordnung aus.

Die erfindungsgemäßen Trennwände können je nach Bedarf an unterschiedlichen Positionen entlang der Längserstreckung des Trogs entnehmbar sein. Dabei ist es beispielsweise möglich, im Falle eines Sortenwechsels die Trennwände bis zum Austragsbereich im Trog zu belassen, um auf diese Weise eine saubere Sortentrennung über die gesamte Troglänge zu gewährleisten. Der Austrag der erzeugten Käsemasse kann dabei direkt aus den Zellen erfolgen, so daß der beim bisherigen Stand der Technik benötigte Austragssumpf erfindungsgemäß ebenfalls entfällt.

Vorzugsweise wird neben dem Trog eine sich parallel zu dessen Längsrichtung erstreckende Rücktransportvorrichtung für aus dem Trog entnommene Trennwände vorgesehen. Insbesondere werden in Verbindung mit dieser Rücktransportvorrichtung zusätzliche Vorrichtungen zum Einsetzen bzw. Entnehmen der Trennwände vorgesehen, die mit einer Schwenkvorrichtung zum Verschwenken der Trennwände aus der Rückförder- in die Transportposition bzw. umgekehrt, insbesondere um 90° ausgestattet sind. In letztgenanntem Fall sind die Trennwände während des Rücktransportvorgangs vertikal und parallel zur Längsrichtung des Trogs ausgerichtet, wobei von Vorteil ist, daß die Trennwände neben und nicht wie bisher üblich über dem Trog transportiert werden, was unter hygienischen Gesichtspunkten eine Verbesserung darstellt. Zudem läßt sich in eine Rücktransportvorrichtung der genannten Art ohne Schwierigkeiten eine Wascheinrichtung für die Trennwände integrieren.

Weitere bevorzugte Ausführungsformen der Erfindung sind in den Unteransprüchen angegeben.

Die Erfindung wird nachfolgend anhand von Ausführungsbeispielen unter Bezugnahme auf die Zeichnungen beschrieben; es zeigt:
- Fig. 1: einen senkrecht zur Transportrichtung verlaufenden Vertikalschnitt einer erfindungsgemäßen Vorrichtung,
- Fig. 2a und b: unterschiedliche Ausführungsformen von in die Troginnenwand eingedrückten Trennwänden,
- Fig. 3: eine mögliche Ausführungsform einer erfindungsgemäß verwendbaren Spannvorrichtung, und
- Fig. 4: die perspektivische Gesamtansicht einer Ausführungsform einer erfindungsgemäßen Vorrichtung.

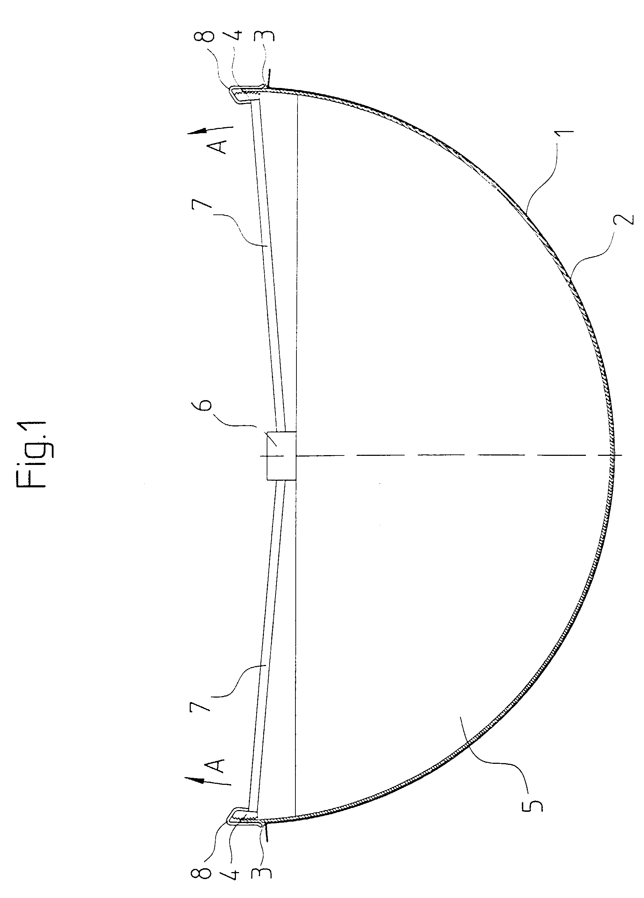

Fig. 1 zeigt die schematische Darstellung eines im Querschnitt halbkreisförmigen Trogs 1, der beispielsweise aus einer metallischen Wanne besteht und an seiner Innenseite mit einer senkrecht zur Zeichenebene relativ zum Trog 1 beweglichen Innenwand 2 versehen ist.

Die Troginnenwand 2 kann dabei aus einem in Transportrichtung umlaufenden, gemuldeten Endlosband bestehen, welches insbesondere eine Stärke von ungefähr 5 mm aufweist. Die Troginnenwand 2 ist dabei aus zumindest geringfügig nachgiebigem Material gefertigt, welches unter Druckeinwirkung verformbar ist.

Im Bereich der oberen Ränder 3 des Trogs 1 steht die Troginnenwand 2 im wesentlichen senkrecht nach oben hervor, so daß die Außenseiten der Troginnenwand 2 jeweils in einem streifenförmigen Bereich 4 oberhalb der oberen Ränder 3 des Trogs 1 freiliegen.

In den Trog 1 ist eine Trennwand 5 eingesetzt, die aus einem vergleichsweise harten Material, beispielsweise aus Edelstahl besteht und eine dem Trogquerschnitt angepaßte, im wesentlichen ebenfalls halbkreisförmige Umfangslinie aufweist. Der Halbkreisradius des halbkreisförmigen Trogquerschnitts bzw. der halbkreisförmigen Umfangslinie der Trennwand5kann ungefähr zwischen 600 mm und 900 mm, insbesondere in etwa 750 mm betragen.

Im mittleren Bereich ihrer obenliegenden geraden Seite ist die Trennwand 5 mit einer Halterung 6 für zwei Federstäbe 7 versehen, die sich jeweils von der Halterung 6 senkrecht zur Transportrichtung bis zu einem der streifenförmigen Bereiche 4 erstrecken.

An ihrem der Halterung 6 abgewandten Ende sind die Federstäbe 7 jeweils mit einem Klemmelement 8 versehen, welches jeweils zum Greifen der streifenförmigen Bereiche 4 bzw. der oberen Ränder der Troginnenwand 2 ausgelegt ist.

Die Klemmelemente 8 können so ausgebildet sein, daß die Troginnenwand 2 in diese einfädelbar und in diesen im eingefädelten Zustand selbsthemmend gehalten ist. Weiterhin ist es möglich, die Klemmelemente 8 mit einem Betätigungsmechanismus zum Öffnen und Schließen derselben zu versehen.

In der in Fig. 1 dargestellten Position, in der die Trennwand 5 in den Trog 1 eingesetzt ist, üben die Federstäbe 7 über die Klemmelemente 8 eine in Richtung der Pfeile A gerichtete Kraft auf die streifenförmigen Bereiche 4 aus, wodurch die elastische Troginnenwand 2 um die starre Trennwand 5 gespannt wird. Durch diese Spannkraft wird bewirkt, daß sich die Trennwand 5 in ihren der Troginnenwand 2 zugewandten Bereichen in diese eindrückt, wodurch eine abdichtende und stabile Verbindung zwischen Trennwand 5 und Troginnenwand 2 hergestellt wird.

Die Größe der über ein Klemmelement 8 übertragenen Spann- bzw. Zugkraft liegt besipielsweise in einem Bereich zwischen 50 kg und 300 kg, insbesondere zwischen 100 kg und 200 kg.

Die in Fig. 1 gezeigte Darstellung soll lediglich schematisch das erfindungsgemäße Funktionsprinzip verdeutlichen und beinhaltet deshalb keine konstruktionstechnischen Einzelheiten.

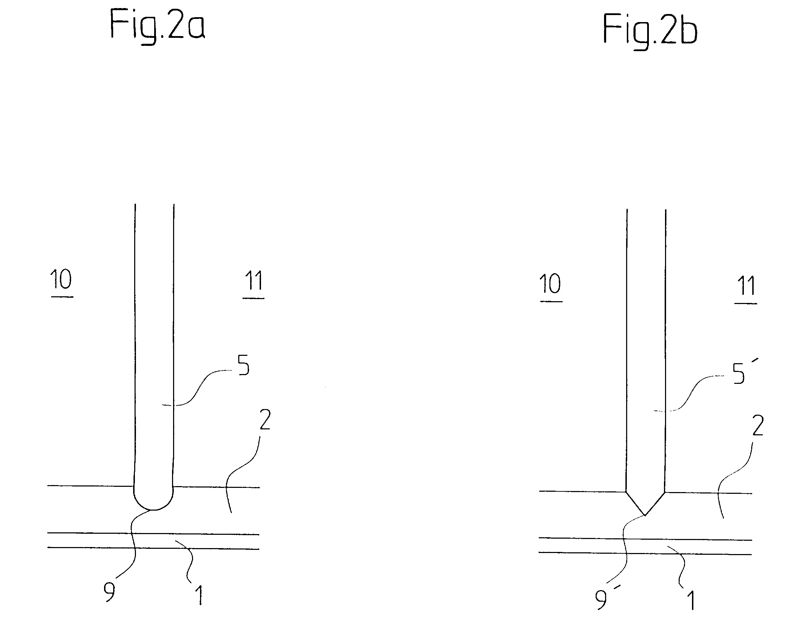

Fig. 2a zeigt einen in Transportrichtung der Troginnenwand 2 verlaufenden Vertikalschnitt durch denjenigen Bereich einer erfindungsgemäßen Vorrichtung, in dem die Trennwand 5 in die Troginnenwand 2 eingedrückt ist.

Durch den erfindungsgemäßen Spannvorgang wird die im Trog 1 geführte Troginnenwand 2 um die dieser zugewandte Schmalseite 9 der Trennwand 5 gespannt. Dieser Spannvorgang bewirkt, daß sich die Trennwand 5 mit ihrer Schmalseite 9, die gemäß Fig. 2a mit einem Radius versehen ist, in die zumindest geringfügig elastische Troginnenwand 2 eindrückt. Auf diese Weise wird eine strömungsdichte und stabile Verbindung zwischen Trennwand 5 und Troginnenwand 2 hergestellt, wodurch zwei benachbarte, auf gegenüberliegenden Seiten der Trennwand 5 liegende Zellen 10, 11 zuverlässig gegeneinander abgedichtet werden.

Fig. 2b entspricht im wesentlichen Fig. 2a mit dem Unterschied, daß die Schmalseite 9' der Trennwand 5' hier als dachförmige Kante ausgebildet ist, welche sich ebenso wie die mit dem Radius gemäß Fig. 2a versehene Kante 9 besonders gut in die elastische Trennwand 2 eindrückt und damit eine zuverlässige Verbindung zwischen Trennwand 5' und Troginnenwand 2 herstellt.

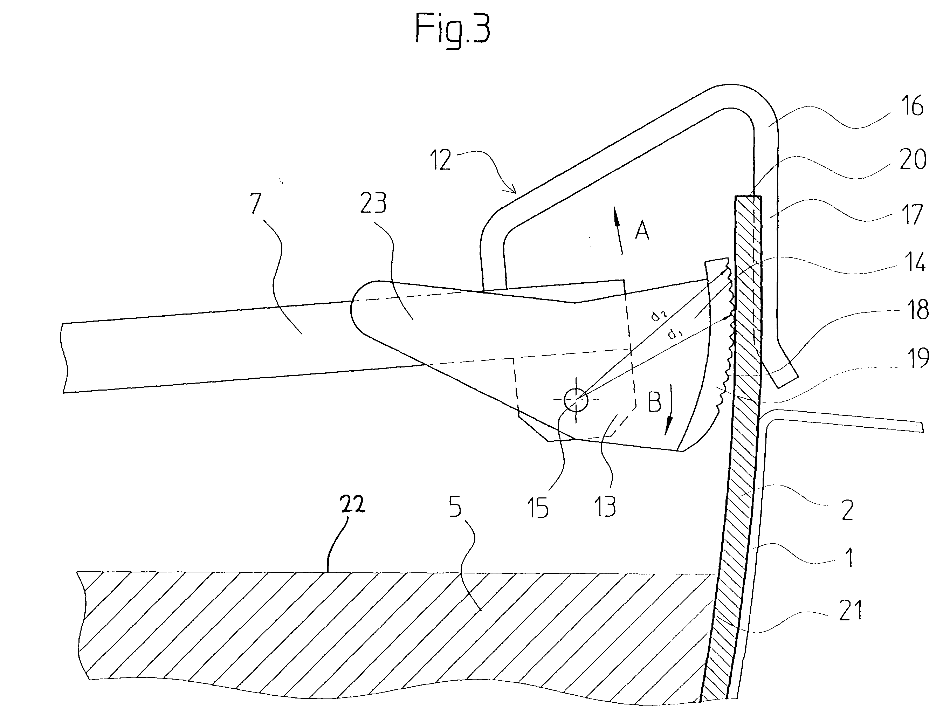

Fig. 3 zeigt die schematische Darstellung eines mit der Troginnenwand 2 gekoppelten Klemmelements 12, welches an einem Federstab 7 gemäß Fig. 1 angeordnet ist.

Der Federstab 7 ist dabei entsprechend Fig. 1 mit der Trennwand 5 gekoppelt und übt in der in Fig. 3 dargestellten Position eine Zugkraft in Richtung des Pfeiles A aus.

An seinem der Troginnenwand 2 zugewandten Ende ist der Federstab 7 mit einer sich nach unten erstreckenden Lasche 13 versehen, an welcher ein Klemmbacken 14 um eine Achse 15 schwenkbar gelagert ist. Das Lager 15 ist dabei mit einem nicht dargestellten Federelement versehen, welches den Klemmbacken 14 im Uhrzeigersinn in Richtung des Pfeiles B vorspannt.

Am Federstab 7 ist ein Gegenhaltebügel 16 angebracht, welcher eine Anlagefläche 17 aufweist, die sich auf der dem Klemmbacken 14 gegenüberliegenden Seite des oberen Endbereichs der Troginnenwand 2 befindet.

In der in Fig. 3 dargestellten Position ist der obere Rand der Troginnenwand 2 zwischen der Anlagefläche 17 und einem mit einer Querriffelung 18 versehenen Angriffsbereich 19 des Klemmbackens 14 eingeklemmt und gehalten.

Da sich der Abstand dl, d2 zwischen der Drehachse 15 des Klemmbackens 14 und der Querriffelung 18 in Richtung des oberen Endes 20 der Troginnenwand 2 vergrößert, wird der obere Randbereich der Troginnenwand 2 bei einer durch den Federstab 7 bewirkten Zugkraft in Richtung des Pfeiles A zuverlässig zwischen Angriffsbereich 19 und Anlagefläche 17 eingeklemmt, so daß die genannte Zugkraft direkt auf die Troginnenwand 2 übertragen wird.

Durch diese Zugkraftübertragung wird die Troginnenwand 2 unter geringfügiger Verformung um den ihr zugewandten Teilbereich des Trennwandumfangs 21 gespannt, wodurch sich die Schmalseite der Trennwand 5 in die Troginnenwand 2 entsprechend den Fig. 2a und 2b eindrückt und eine mechanisch stabile und benachbarte Zellen gegeneinander abdichtende Verbindung zwischen Troginnenwand 2 und Trennwand 5 geschaffen wird.

Soll die Trennwand 5 aus dem Trog 1 entnommen werden, wird folgendermaßen vorgegangen:

Auf den Federstab 7 wird eine entgegen dem Pfeil A in Richtung der Oberkante 22 der Trennwand 5 gerichtete Druckkraft ausgeübt, wodurch die auf die Troginnenwand 2 ausgeübte Zugkraft von dieser weggenommen wird, so daß sich eine Entspannung der Troginnenwand 2 einstellt.

Anschließend wird auf den dem Angriffsbereich 19 abgewandten Endbereich 23 des Klemmbackens 14 eine Druckkraft ausgeübt, die eine Drehung des Klemmbackens 14 entgegen dem Uhrzeigersinn und entgegen der Vorspannung des Klemmbackens 14 um die Achse 15 bewirkt. Durch diese Drehung wird die zwischen Angriffsbereich 19 des Klemmbackens 14 und Anlagefläche 17 eingeklemmte Troginnenwand 2 freigegeben, so daß die Trennwand 5 gemeinsam mit der an ihr befestigten Klemm- und Spannvorrichtung 7, 12 aus dem Trog 1 entnommen werden kann.

Beim Einsetzen der Trennwand 5 in den Trog 1 wird in umgekehrter Reihenfolge vorgegangen, daß heißt, es wird zuerst eine Druckkraft auf den Endbereich des Klemmbackens 14 und auf den Federstab 7 aufgebracht, anschließend die Trennwand 5 eingesetzt, woraufhin die genannten Druckkräfte von Klemmbacken 14 und Federstab 7 abgenommen werden. Auf diese Weise wird durch die Vorspannung des Klemmbackens 14 ein Einklemmen der Troginnenwand 2 zwischen Angriffsbereich 19 und Anlagefläche 17 sowie der durch den Federstab 7 verursachte Spannvorgang bewirkt.

Geeignete Einrichtungen zur Erzeugung der genannten Druckkräfte werden vorzugsweise mit entlang des Trogs 1 angeordneten Vorrichtungen zum Einsetzen bzw. Entnehmen der Trennwände gekoppelt.

Die in Fig. 3 dargestellte Ausführungsform eines Klemmelements 12 sowie einer als Federstab 7 ausgebildeten Spannvorrichtung ist lediglich beispielhaft zu verstehen; es läßt sich auch jede beliebige andere konstruktionstechnische Ausbildung dieser Vorrichtungen realisieren.

Fig. 4 zeigt eine perspektivische Gesamtansicht einer erfindungsgemäßen Vorrichtung mit einem langgestreckten Trog 1, der an seinem einen Ende mit einem Einfüllbereich 24 und an seinem anderen Ende mit einem Austragsbereich 25 versehen ist und eine kontinuierlich zwischen Einfüllbereich 24 und Austragsbereich 25 transportierbare Innenwand 2 aufweist. Die Troginnenwand 2 ist dabei aus einem in Transportrichtung umlaufenden, gemuldeten Endlosband gebildet, das an den beiden Enden der dargestellten Vorrichtung jeweils um eine Förderwalze 26, 27 geführt ist.

Im Einfüllbereich 24 ist eine Einsetzeinrichtung 28 zum Einsetzen von Trennwänden 5 in den Trog 1 vorgesehen.

Im mittleren Bereich des Trogs 1 sowie in seinem dem Austragsbereich 25 zugewandten Endbereich ist jeweils eine Entnahmeeinrichtung 29, 30 vorgesehen, mittels der im Trog 1 befindliche Trennwände 5 aus diesem entnommen werden können.

Die Einrichtungen 28, 29, 30 können bevorzugt an variablen Positionen entlang des Trogs 1 stationiert werden, um so ein Einsetzen bzw. Entnehmen von Trennwänden 5 variabel an die jeweils herzustellende Käsesorte anzupassen.

Die Einrichtungen 28, 29, 30 weisen jeweils eine Schwenkvorrichtung zum Verschwenken der einzusetzenden bzw. entnommenen Trennwände 5 auf, wobei die Schwenkvorrichtung ein Verschwenken der Trennwände 5 um 90° aus der Transportposition in eine Rückförderposition oder umgekehrt bewirken kann.

Neben dem Trog 1 erstreckt sich parallel zu dessen Längsrichtung eine Rücktransportvorrichtung 31 für von den Entnahmeeinrichtungen 29, 30 entnommene und von der Einsetzeinrichtung 28 wiederum einzusetzende Trennwände 5. Die Rücktransportvorrichtung 31 ist dabei so ausgebildet, daß sich die entgegen der Transportrichtung rückgeförderten Trennwände 5 vertikal und parallel zur Längsrichtung des Trogs 1 erstrecken. In der Rücktransportvorrichtung 31 ist eine in Fig. 4 nicht dargestellte Wascheinrichtung für die Trennwände 5 vorgesehen, welche während des Rücktransportvorgangs einen Reinigungsvorgang bewirkt.

Zwischen der im mittleren Bereich des Trogs 1 angeordneten Entnahmeeinrichtung 29 und dem Austragsbereich 25 ist der Trog 1 mit einer Schneideinrichtung 32 versehen, mit der die nach dem Koagulationsvorgang nicht mehr fließfähige Käsemasse zu Käsebruch schneidbar ist.

Mit der kontinuierlich in Transportrichtung geförderten Troginnenwand 2 sind auf die erfindungsgemäße Weise in äquidistanten Abständen angeordnete Trennwände 5 gekoppelt, zwischen denen einzelne Zellen 33 ausgebildet sind, in welchen während des Transportvorgangs die Koagulation der zuvor eingefüllten Milch stattfindet.

Bei der in Fig. 4 dargestellten Ausführungsform ist die im wesentlichen durch zwei Einfüllrohre 34 gebildete Einfüllvorrichtung so angeordnet, daß der Einfüllvorgang in bereits gebildete Zellen 33 erfolgt (siehe Detaildarstellung). Auf diese Weise wird die Bildung eines Einlaufsumpfes zwischen der Förderwalze 26 und der in Transportrichtung hintersten Trennwand 5 vermieden, was zu den vorstehend bereits erwähnte Vorteilen führt.

Alternativ wäre es jedoch ebenso möglich, auch bei dieser Ausführungsform mit einem Einlaufsumpf zu arbeiten; hierfür müßten entweder die Einlaufrohre 34 näher bei der Förderwalze 26 oder die Einsetzeinrichtung 28 mit größerem Abstand von der Förderwalze 26 angeordnet werden.

Die in den Trog 1 eingebrachten Trennwände 5 können entweder durch die Entnahmeeinrichtung 29 im mittleren Bereich des Trogs 1 entnommen werden oder bis zum Ende des Trogs 1 mit der Troginnenwand 2 gekoppelt bleiben.

Beispielsweise bei einem Sortenwechsel ist es sinnvoll, die die beiden Sorten trennende Trennwand 5 bis zum Trogende durchlaufen zu lassen, um so ein Vermischen der Sorten beispielsweise während des durch die Schneideinrichtung 32 bewirkten Schneidvorgangs zu verhindern.

Bei der Produktion von kleinen Chargen, das heißt bei einem häufigen Sortenwechsel, kann es auch sinnvoll sein, sämtliche Trennwände 5 bis zum Trogende durchlaufen zu lassen.

Bei der in Fig. 4 dargestellten Ausführungsform ist unmittelbar hinter der Entnahmeeinrichtung 30 eine starre und nicht entnehmbare Trennwand 35 vorgesehen, die die jeweils in Transportrichtung vorderste Zelle 33 auf ihrer in Förderrichtung vorne liegenden Seite abschließt. Durch die Vorsehung dieser starren Trennwand 35 wird es möglich, die erzeugte Käsemasse mittels eines Austragsrohres 36 aus der jeweils in Förderrichtung vorne liegenden Zelle 33 zu fördern, ohne daß sich ein Austragssumpf bildet.

Alternativ kann jedoch ebenso mit einem Austragssumpf gearbeitet werden, wenn die starre Trennwand 35 nicht vorgesehen wird.

Die erfindungsgemäße Vorrichtung kann somit auf einfache Weise individuell an den für eine bestimmte Käsesorte erforderlichen Produktionsprozeß angepaßt werden, da die Trennwände 5 auf einfachste Weise an beliebigen Positionen in den Trog 1 eingesetzt oder aus ihm entnommen werden können. Zudem weist die erfindungsgemäße Vorrichtung die bereits beschriebenen Vorteile hinsichtlich des reduzierten Wasserverbrauchs und der verringerten Kontaminationsgefahr auf, wobei gleichzeitig eine zuverlässige Funktionsfähigkeit der Gesamtvorrichtung aufgrund der stabilen Verbindung zwischen Trennwänden 5 und Troginnenwand 2 gewährleistet bleibt.

## Patentansprüche

1. Vorrichtung zum Gewinnen von Käsemasse aus Milch mit einem langgestreckten Trog (1), der an seinem einen Ende mit einem Einfüllbereich (24) und an seinem anderen Ende mit einem Austragsbereich (25) versehen ist und eine zumindest im wesentlichen kontinuierlich zwischen Einfüll- (24) und Austragsbereich (25) transportierbare Innenwand (2) aufweist, wobei das Trogvolumen durch eine Anzahl von dem Trogquerschnitt angepaßten, mit der Innenwand (2) koppel- und gemeinsam mit dieser bewegbaren Trennwänden (5, 5') in in Längsrichtung aufeinanderfolgende Zellen unterteilbar ist,
dadurch **gekennzeichnet**,
daß zur Erzeugung einer mechanisch stabilen und benachbarte Zellen (10, 11, 33) gegeneinander abdichtenden Verbindung zwischen einander zugewandten Bereichen von Troginnenwand (2) und Trennwand (5, 5') jeder Trennwand (5, 5') eine Spannvorrichtung (6, 7, 8, 12) zugeordnet ist, die sowohl an der zugeordneten Trennwand (5, 5') als auch an der Troginnenwand (2) angreift und mittels der die aus nachgiebigem Material bestehende Troginnenwand (2) unter geringfügiger Verformung um den ihr zugewandten Teilbereich des Trennwandumfangs (21) spannbar ist.

2. Vorrichtung nach Anspruch 1,
dadurch **gekennzeichnet**,
daß zur Aufnahme von durch unterschiedliche Füllstände benachbarter Zellen (10, 11, 33) erzeugten Querkräften der durch die Spannvorrichtung (6, 7, 8, 12) bewirkte Anpreßdruck zwischen Troginnenwand (2) und Trennwand (5, 5') einer Gewichtskraft in einem Bereich zwischen 50 kg und 300 kg, insbesondere zwischen 100 kg und 200 kg entspricht.

3. Vorrichtung nach einem der vorhergehenden Ansprüche,
dadurch **gekennzeichnet**,
daß die Trennwände (5, 5') an ihren der Troginnenwand (2) zugewandten Schmalseiten (9, 9') mit einem Radius oder einer dachförmigen Kante versehen sind, und/oder daß alle Trennwände (5, 5') identisch ausgebildet sind.

4. Vorrichtung nach einem der vorhergehenden Ansprüche,
dadurch **gekennzeichnet**,
daß die Spannvorrichtung (6, 7, 8, 12) an der Trennwand (5, 5') angebracht ist.

5. Vorrichtung nach einem der vorhergehenden Ansprüche,
dadurch **gekennzeichnet**,
daß die Spannvorrichtung (6, 7, 8, 12) zumindest ein insbesondere als Federstab (7) ausgebildetes Federelement aufweist, das vor der Kopplung mit der Troginnenwand (2) vorspannbar und bei Kopplung der Troginnenwand (2) unter teilweiser Entspannung desselben zur Erzeugung der erforderlichen Spannkraft geeignet ist.

6. Vorrichtung nach Anspruch 5,
dadurch **gekennzeichnet**,
daß zwei im Bereich der beiden einander gegenüberliegenden oberen Ränder (4) der Troginnenwand (2) endende Federstäbe (7) mit jeweils einem Klemmelement (8, 12) zum Greifen dieser Ränder (4) verbunden sind.

7. Vorrichtung nach Anspruch 6,
dadurch **gekennzeichnet**,
daß die Troginnenwand (2) in die Klemmelemente (8, 12) einfädelbar und in diesen im eingefädelten Zustand selbsthemmend gehalten ist, und/oder daß die Klemmelemente (8, 12) mit einem Betätigungsmechanismus zum Öffnen und Schließen derselben versehen sind.

8. Vorrichtung nach einem der vorhergehenden Ansprüche,
dadurch **gekennzeichnet**,
daß die Troginnenwand (2) quer zur Transportrichtung verstärkt ist, aus zumindest geringfügig elastisch verformbarem Kunststoff, insbesondere aus PVC besteht, mit einem Längs- und/oder Quergewebe versehen ist, und/oder aus einem in Transportrichtung umlaufenden, gemuldeten Endlosband gebildet ist, welches insbesondere eine Stärke von ungefähr 5 mm aufweist.

9. Vorrichtung nach einem der vorhergehenden Ansprüche,
dadurch **gekennzeichnet**,
daß der Trog (1) einen im wesentlichen halbkreisförmigen Querschnitt und die Trennwände (5, 5') eine entsprechende, ebenfalls im wesentlichen halbkreisförmige Umfangslinie (21) aufweisen, wobei insbesondere der Halbkreisradius ungefähr zwischen 600 mm und 900 mm, insbesondere in etwa 750 mm beträgt.

10. Vorrichtung nach einem der vorhergehenden Ansprüche,
dadurch **gekennzeichnet**,
daß die Trennwände (5, 5') zumindest im wesentlichen aus Metall, insbesondere aus Edelstahl bestehen.

11. Vorrichtung nach einem der vorhergehenden Ansprüche,
dadurch **gekennzeichnet**,
daß der Einfüllbereich (24) im Bereich bereits durch Trennwände (5, 5') gebildeter Zellen (10, 11, 33) angeordnet ist, so daß die Zellen (10, 11, 33) direkt mit Milch befüllbar sind, und/oder daß der Austragsbereich (25) im Bereich durch Trennwände (5, 35) gebildeter Zellen (10, 11, 33) angeordnet ist, so daß die Käsemasse direkt aus den Zellen (10, 11, 33) entnehmbar ist.

12. Vorrichtung nach einem der vorhergehenden Ansprüche,
dadurch **gekennzeichnet**,
daß zumindest im Einfüllbereich (24) eine Vorrichtung (28) zum Einsetzen der Trennwände (5, 5') und zumindest im Austragsbereich (25) eine Vorrichtung (30) zum Entnehmen der Trennwände (5, 5') vorgesehen ist.

13. Vorrichtung nach einem der vorhergehenden Ansprüche,
dadurch **gekennzeichnet**,
daß die Trennwände (5, 5') an unterschiedlichen Positionen entlang der Längserstreckung des Trogs (1) entnehmbar sind.

14. Vorrichtung nach einem der vorhergehenden Ansprüche,
dadurch **gekennzeichnet**,
daß neben dem Trog (1) eine sich parallel zu dessen Längsrichtung erstreckende Rücktransportvorrichtung (31) für beispielsweise im Austragsbereich (25) entnommene und im Einfüllbereich (24) einzusetzende Trennwände (5, 5') vorgesehen ist, wobei sich insbesondere die in der Rücktransportvorrichtung (31) beförderten Trennwände (5, 5') vertikal und parallel zur Längsrichtung des Trogs (1) erstrecken.

15. Vorrichtung nach einem der Ansprüche 12 bis 14,
dadurch **gekennzeichnet**,
daß die Vorrichtungen (28, 29, 30) zum Einsetzen bzw. Entnehmen der Trennwände (5, 5') mit einer Schwenkvorrichtung zum Verschwenken der Trennwände (5, 5') aus der Rückförder- in die Transportposition bzw. umgekehrt, insbesondere um 90° versehen sind.

16. Vorrichtung nach einem der Ansprüche 14 oder 15,
dadurch **gekennzeichnet**,
daß die Rücktransportvorrichtung (31) mit einer Wascheinrichtung für die Trennwände (5, 5') versehen ist.

## Claims

1. An apparatus for obtaining cheese material from milk comprising an elongate trough (1) which is provided at its one end with a filling zone (24) and at its other end with a discharge zone (25) and which has an inner wall (2) which is transportable at least substantially continuously between the filling zone (24) and the discharge zone (25), wherein the volume of the trough can be subdivided by a number of partition walls (5, 5') which are matched to the trough cross-section, which can be coupled to the inner wall (2), and which are movable jointly therewith, into cells which follow one another in the longitudinal direction, characterised in that a clamping device (6, 7, 8, 12) is associated with each partition wall (5, 5') and acts on both the associated partition wall (5, 5') and the inner wall (2) of the trough, by means of which the inner wall (2) of the trough consisting of a flexible material can be clamped with slight deformation around the partial region of the periphery (21) of the partition wall facing it in order to produce a mechanically stable connection, which seals adjacent cells (10, 11, 33) relative to one another, between confronting regions of the inner wall (2) of the trough and the partition wall (5, 5').

2. An apparatus in accordance with claim 1, characterised in that the contact pressure between the inner wall (2) of the trough and the partition wall (5, 5') corresponds to a force in a region between 50 kg weight and 300 kg weight , in particular between 100 kg weight and 200 kg weight, to take up transverse forces generated by different filling levels of adjacent cells (10, 11, 33).

3. An apparatus in accordance with one of the preceding claims, characterised in that the partition walls (5, 5') are provided with a radius or roof-like edge at their narrow sides (9, 9') facing the inner wall (2) of the trough and/or in that all partition walls (5, 5') are made identically.

4. An apparatus in accordance with one of the preceding claims, characterised in that the clamping device (6, 7, 8, 12) is attached to the partition wall (5, 5').

5. An apparatus in accordance with one of the preceding claims, characterised in that the clamping device (6, 7, 8, 12) has at least one spring element made as a spring bar (7) which can be biased prior to coupling with the inner wall (2) of the trough and which, on the coupling of the inner wall (2) of the trough, is suitable for generating the required clamping force while undergoing partial relaxation.

6. An apparatus in accordance with claim 5, characterised in that two spring bars (7) ending in the region of the two opposing upper edges (4) of the inner wall (2) of the trough are each connected to one clamping element (8, 12)for the gripping of these edges (4).

7. An apparatus in accordance with claim 6, characterised in that the inner wall (2) of the trough can be threaded into the clamping elements (8, 12) and is held in a self-locking manner in the threaded state and/or in that the clamping elements (8, 12) are provided with an actuating mechanism to open and close them.

8. An apparatus in accordance with one of the preceding claims, characterised in that the inner wall (2) of the trough is reinforced transversely to the direction of transportation, is made of at least slightly elastically deformable plastic, in particular of PVC, is provided with a longitudinal and/or transverse fabric and/or is formed from an endless belt bowed into a trough and running in the direction of transportation which, in particular, has a thickness of approximately 5 mm.

9. An apparatus in accordance with one of the preceding claims, characterised in that the trough (1) has a substantially semi-circular cross-section and the partition walls (5, 5') have a corresponding, also substantially semi-circular peripheral line (21), with in particular the radius of the semi-circle being approximately between 600 mm and 900 mm, in particular approximately 750 mm.

10. An apparatus in accordance with one of the preceding claims, characterised in that the partition walls (5, 5') consist at least substantially of metal, in particular of stainless steel.

11. An apparatus in accordance with one of the preceding claims, characterised in that the filling zone (24) is arranged in the region of cells (10, 11, 33) already formed by partition walls (5, 5') so that the cells (10, 11, 33) can be filled with milk directly and/or in that the discharge zone (25) is arranged in the region of cells (10, 11, 33) formed by partition walls (5, 35) so that the cheese material can be removed from the cells (10, 11, 33) directly.

12. An apparatus in accordance with one of the preceding claims, characterised in that a device (28) for the inserting of the partition walls (5, 5') is provided at least in the filling zone (24) and in that a device (30) for the removal of the partition walls (5, 5') is provided in at least the discharge zone (25).

13. An apparatus in accordance with one of the preceding claims, characterised in that the partition walls (5, 5') can be removed at different positions along the longitudinal extension of the trough (1).

14. An apparatus in accordance with one of the preceding claims, characterised in that a return transportation device (31) is provided next to the trough (1) and extending parallel to its longitudinal direction for partition walls (5, 5'), for example for partition walls removed in the discharge zone (25) and to be inserted in the filling zone (24), with the partition walls (5, 5') conveyed in the direction of return transportation in particular extending vertically and parallel to the longitudinal direction of the trough (1).

15. An apparatus in accordance with one of claims 12 to 14, characterised in that the devices (28, 29, 30) for the insertion or removal of the partition walls (5, 5') are provided with a pivoting device to pivot the partition walls (5, 5') out of the return conveyance position into the transportation position or vice versa, in particular through 90°.

16. An apparatus in accordance with claim 14 or claim 15, characterised in that the return transportation device (31) is provided with a washing apparatus for the partition walls (5, 5').

## Revendications

1. Dispositif pour l'obtention de caillé à partir de lait, comportant une auge longue (1) qui est munie à une extrémité d'une zone de remplissage (24) et à son autre extrémité d'une zone d'évacuation (25) et qui a une paroi interne (2) transportable au moins globalement de façon continue entre la zone de remplissage (24) et la zone d'évacuation (25), le volume de l'auge pouvant être divisé en cellules successives dans le sens de la longueur par un certain nombre de parois séparatrices (5, 5') adaptées à la section transversale de l'auge, pouvant être couplées à la paroi interne (2) et pouvant être déplacées conjointement à celle-ci,
caractérisé en ce que, pour produire un assemblage, qui soit mécaniquement stable et qui étanchéifie des cellules voisines (10, 11, 33) les unes par rapport aux autres, entre des zones proches les unes des autres de la paroi interne d'auge (2) et de la paroi séparatrice (5, 5'), il est associé à chaque paroi séparatrice (5, 5') un dispositif de serrage (6, 7, 8, 12) qui est en prise aussi bien avec la paroi séparatrice (5, 5') associée qu'avec la paroi interne d'auge (2) et au moyen duquel la paroi interne d'auge (2) construite en un matériau souple peut être tendue, en se déformant légèrement, autour de la zone partielle, qui lui est proche, de la périphérie de paroi séparatrice (21).

2. Dispositif selon la revendication 1,
caractérisé en ce que, pour supporter des forces transversales produites par différents niveaux de remplissage de cellules voisines (10, 11, 33), la pression d'appui appliquée par le dispositif de serrage (6, 7, 8, 12) entre la paroi interne d'auge (2) et la paroi séparatrice (5, 5') correspond à un poids se situant dans une plage entre 50 kg et 300 kg, notamment entre 100 kg et 200 kg.

3. Dispositif selon l'une des revendications précédentes,
caractérisé en ce que les parois séparatrices (5, 5') sont munies, sur leurs côtés étroits (9, 9') proches de la paroi interne d'auge (2), d'un rayon ou d'une arête en forme de toit et/ou en ce que toutes les parois séparatrices (5, 5') sont conçues de façon identique.

4. Dispositif selon l'une des revendications précédentes,
caractérisé en ce que le dispositif de serrage (6, 7, 8, 12) est placé sur la paroi séparatrice (5, 5').

5. Dispositif selon l'une des revendications précédentes,
caractérisé en ce que le dispositif de serrage (6, 7, 8, 12) comporte au moins un élément formant ressort qui est conçu notamment comme une barre formant ressort (7), qui peut être précontraint avant le couplage avec la paroi interne d'auge (2) et qui, en se relâchant partiellement, convient à la production de la force de serrage nécessaire lors du couplage de la paroi interne d'auge (2).

6. Dispositif selon la revendication 5,
caractérisé en ce que deux barres formant ressorts (7) se terminant dans la zone des deux roues supérieures (4), situées en face l'une de l'autre, de la paroi interne d'auge (2) sont reliées à chaque fois à un élément de serrage (8, 12) destiné à saisir ces roues (4).

7. Dispositif selon la revendication 6,
caractérisé en ce que la paroi interne d'auge (2) peut être enfilée dans les éléments de serrage (8, 12) et est maintenue dans ceux-ci avec un blocage automatique à l'état enfilé et/ou en ce que les éléments de serrage (8, 12) sont munis d'un mécanisme d'actionnement pour l'ouverture et pour la fermeture desdits éléments de serrage.

8. Dispositif selon l'une des revendications précédentes,
caractérisé en ce que la paroi interne d'auge (2) est renforcée transversalement par rapport à la direction de transport, est constituée en une matière plastique au moins légèrement élastiquement déformable, notamment en PVC, est munie d'un tissu longitudinal et/ou transversal et/ou est formée d'une bande sans fin en forme d'auge qui tourne dans la direction de transport et qui a notamment une épaisseur de 5 mm environ.

9. Dispositif selon l'une des revendications précédentes, caractérisé en ce que l'auge (1) a une section transversale sensiblement en forme de demi-cercle et les parois séparatrices (5, 5') ont une ligne périphérique (21) correspondante, également sensiblement en forme de demi-cercle, le rayon du demi-cercle étant notamment d'environ entre 600 mm et 900 mm, en particulier 750 mm environ.

10. Dispositif selon l'une des revendications précédentes,
caractérisé en ce que les parois séparatrices (5, 5') sont au moins globalement en métal, notamment en acier spécial.

11. Dispositif selon l'une des revendications précédentes,
caractérisé en ce que la zone de remplissage (24) est agencée dans la zone de cellules (10, 11, 33) déjà formées par des parois séparatrices (5, 5') de telle sorte que les cellules (10, 11, 33) peuvent être remplies directement avec du lait et/ou en ce que la zone d'évacuation (25) est agencée dans la zone de cellules (10, 11, 33) formées par des parois séparatrices (5, 35) de telle sorte que le caillé peut être enlevé directement des cellules (10, 11, 33).

12. Dispositif selon l'une des revendications précédentes,
caractérisé en ce qu'il est prévu au moins dans la zone de remplissage (24) un dispositif (28) destiné à placer les parois séparatrices (5, 5') et au moins dans la zone d'évacuation (25) un dispositif (30) destiné à enlever les parois séparatrices (5, 5').

13. Dispositif selon l'une des revendications précédentes,
caractérisé en ce que les parois séparatrices (5, 5') peuvent être enlevées en différentes positions tout au long de l'auge (1).

14. Dispositif selon l'une des revendications précédentes,
caractérisé en ce qu'il est prévu à côté de l'auge (1) un dispositif de transport en arrière (31) s'étendant parallèlement au sens de la longueur de cette auge et destiné par exemple à des parois séparatrices (5, 5') enlevées dans la zone d'évacuation (25) et à placer dans la zone de remplissage (24), les parois séparatrices (5, 5') transportées dans le dispositif de transport en arrière (31) s'étendant en particulier verticalement et parallèlement au sens de la longueur de l'auge (1).

15. Dispositif selon l'une des revendications 12 à 14,
caractérisé en ce que les dispositifs (28, 29, 30) destinés à placer ou à enlever les parois séparatrices (5, 5') sont munis d'un dispositif de pivotement pour faire pivoter les parois séparatrices (5, 5') de la position de transport en arrière à la position de transport et inversement, en particulier de 90°.

16. Dispositif selon l'une des revendications 14 et 15,
caractérisé en ce que le dispositif de transport en arrière (31) est muni d'un dispositif de lavage pour les parois séparatrices (5, 5').
